Europäisches Patentamt

European Patent Office

Office européen des brevets

(11) Veröffentlichungsnummer: **0 237 723**
**A2**

## (12) EUROPÄISCHE PATENTANMELDUNG

(21) Anmeldenummer: 87100828.0

(22) Anmeldetag: 22.01.87

�megaInt. Cl.⁴: **B29C 67/22** , **B29C 47/92**

(30) Priorität: 19.03.86 DE 3609167

(43) Veröffentlichungstag der Anmeldung:
23.09.87 Patentblatt 87/39

(84) Benannte Vertragsstaaten:
AT BE DE FR GB IT NL

(71) Anmelder: **HÜLS AKTIENGESELLSCHAFT**
**Patentabteilung / PB 15 - Postfach 13 20**
**D-4370 Marl 1(DE)**

(72) Erfinder: **Müller, Jürgen**
**Max-Wiethoff-Strasse 5**
**D-4690 Herne(DE)**
Erfinder: **Hardegen, Heinrich**
**Im Hundel 10**
**D-4358 Haltern 6(DE)**
Erfinder: **Zingsheim, Peter**
**An der Mühlenstege 42**
**D-4358 Haltern(DE)**

(54) **Verfahren zur Herstellung geschäumter Extrudate.**

(57) Bei der Herstellung geschäumter Extrudate aus treibmittelhaltigen Thermoplasten auf Extrusionsanlagen ist es schwierig, enge Maßtoleranzen der Extrudate und eine gleichmäßige Schaumstruktur zu erreichen An Stelle der bisher üblichen Veränderung der Abzugsgeschwindigkeit von Hand wird vorgeschlagen, die auf das Extrudat wirkende Zugkraft oder die Spaltöffnungs-Druckkraft in der Kalibrierzone mit einer -bevorzugt elektrisch arbeitenden - Kraftmeßvorrichtung zu messen. Das kraftabhängige Signal der Meßvorrichtung wird auf einen Führungsregler mit Stellbereichsbegrenzung gegeben und mit dem Kraft-Sollwert verglichen. Die Abweichung zwischen diesen beiden Werten dient zur Führung der an der Antriebsregelung der Abzugsvorrichtung von Hand eingestellten Abzugsgeschwindigkeit.

EP 0 237 723 A2

## Verfahren zur Herstellung geschäumter Extrudate

Die Erfindung betrifft ein Verfahren zur Herstellung geschäumter Extrudate mit engen Maßtoleranzen und gleichmäßiger Schaumstruktur auf Extrusionsanlagen.

Die Erfindung bezweckt, die Herstellung geschäumter Kunststoff-Extrudate auf Extrusionsanlagen störungsfrei und einfacher zu gestalten und die Qualität der Extrudate zu verbessern.

Geschäumte Kunststoff-Extrudate werden aus treibmittelhaltigen Thermoplasten auf Extrusionsanlagen herstellt. (H. Domininghaus, in: VDJ-Ingenieurwissen, Extrudieren von Profilen und Rohren (1974), Seiten 47 bis 69). Schwankungen im Extrusions-und Verschäumungsverhalten der treibmittelhaltigen Thermoplaste führen zu nicht maßhaltigen Extrudaten.

Es ist bekannt, die Auswirkungen von Schwankungen im Extrusions-und Verschäumungsverhalten durch manuelles Korrigieren der Abzugsgeschwindigkeit und/oder der Extruderdrehzahl während des Extrusionsvorganges auszugleichen. Diese Methode ist aufwendig und erfahrungsgemäß nur begrenzt wirksam, da die Schwankungen im Extrusions-und Verschäumungsverhalten oft zu spät erkannt werden. Bei Extrudaten mit sehr engen Maßtoleranzen ist das manuelle Korrigieren der Abzugsgeschwindigkeit oft unmöglich.

Damit stellt sich die Aufgabe, ein Verfahren zu finden, mit dem man die Auswirkungen der Schwankungen im Extrusions-und Verschäumungsverhalten des Kunststoffes auf die Abmessungen des Extrudates wirksam ausgleichen kann.

Diese Aufgabe wird erfindungsgemäß gelöst durch ein Verfahren mit den kennzeichnenden Merkmalen des Anspruchs 1.

Die zu messende Kraft ist entweder die Zugkraft in Laufrichtung des Extrudates, die einerseits an der (gesamten oder einem Abschnitt der) Kalibriervorrichtung, andererseits an der Abzugsvorrichtung gemessen werden kann, oder die Spaltöffnungs-Druckkraft, die an der Kalibriervorrichtung im Einlaufteil der Kalibrierzone gemessen wird.

Wenn die Zugkraft an der (gesamten oder einem Abschnitt der) Kalibriervorrichtung gemessen wird, ist die (gesamte oder der fragliche Abschnitt der) Kalibriervorrichtung in Richtung der Zugkraft beweglich und reibungsarm gelagert; wird die Zugkraft an der Abzugsvorrichtung gemessen, ist die Abzugsvorrichtung in Richtung der Zugkraft beweglich und reibungsarm gelagert. Wenn die Spaltöffnungs-Druckkraft im Einlaufteil der Kalibriervorrichtung gemessen wird, benutzt man eine Kalibriervorrichtung, die zumindest im Einlaufteil ein in Richtung der Druckkraft beweglich und reibungsarm gelagertes Teil hat, das die Kalibrierkammer teilweise begrenzt, und das die Messung der Spaltöffnungs-Druckkraft ermöglicht. Bei einer Kalibrierkammer mit rechteckigem Querschnitt kann es sich beispielsweise um den Deckels im Einlaufteil der Kalibriervorrichtung handeln, der senkrecht zur Achse des Extrudates beweglich oder der um eine an einer Seite des Deckels befindliche Achse drehbar gelagert ist. Die Spaltöffnungs-Druckkraft wird bevorzugt senkrecht zu der größten Fläche des Extrudates gemessen. Zum Messen einer der obengenannten Kräfte wird eine handelsübliche Meßvorrichtung für wegarme Kraftmessung mit passendem Kraftmeßbereich benutzt. Dabei kann es sich bevorzugt um eine elektrisch arbeitende Vorrichtung handeln oder um eine hydraulisch oder pneumatisch arbeitende Vorrichtung.

Das von der Kraftmeßvorrichtung abgegebene kraftabhängige Signal wird -gegebenenfalls nach Verstärkung -als Regelgröße einem Führungsregler zugeführt, der in die Regelung des Antriebes für die Abzugsvorrichtung eingreift. Der Führungsregler, die Regelung und der Antrieb können elektrisch, hydraulisch oder pneumatisch -rein oder in Kombination -arbeiten.

Bei steigender (fallender) Abzugskraft oder steigender (fallender) Spaltöffnungs-Druckkraft wird die Abzugsgeschwindigkeit vergrößert (verkleinert).

Der Ausgang des Führungsreglers greift additiv in die Sollwertvorgabe der Geschwindigkeitsregelung der Abzugsvorrichtung ein. Um einen sanften Eingriff des Führungsreglers zu ermöglichen, wird dieser auf einen Teil des Stellbereiches der Abzugsgeschwindigkeit begrenzt.

Das erfindungsgemäße Verfahren hat folgende Vorteile:

-Schwankungen im Extrusions-und Verschäumungsverhalten treibmittelhaltiger Thermoplaste haben keinen Einfluß mehr auf die Maßhaltigkeit der geschäumten Extrudate.

-Der Anteil an unbrauchbaren Extrudaten und der Anteil an Extrudaten mit großer Ungleichmäßigkeit in den Abmessungen wird erheblich vermindert.

-Die Extrusionsanlage kann im Dauerbetrieb über große Zeitspannen fast unbeaufsichtigt betrieben werden.

-Der Anfahrvorgang der Extrusionsanlage wird erheblich verkürzt; somit wird die Ausschußquote stark herabgesetzt.

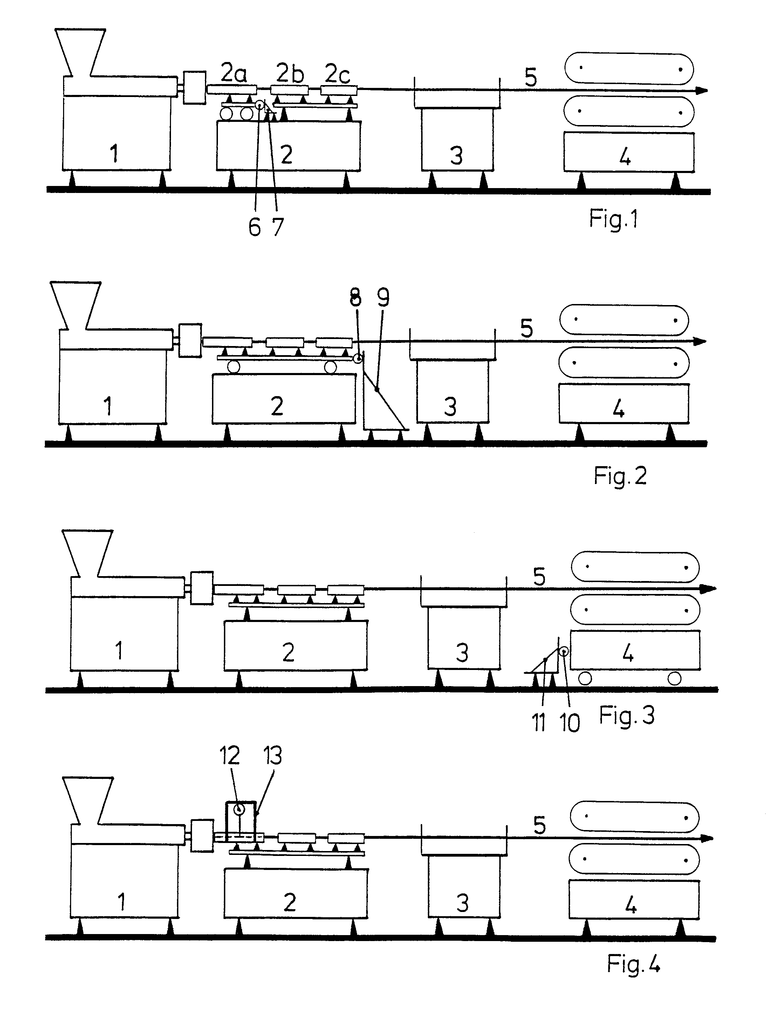

Zur Durchführung des erfindungsgemäßen Verfahrens geeignete Extrusionsanlagen sind in den Figuren 1 bis 4 beispielhaft dargestellt. Diese Figuren zeigen

- den Extruder (1) mit Profilwerkzeug,
- den Kalibriertisch (2) mit beispielsweise drei Kalibrierkammern (2a), (2b) und (2c),
- das Kühlbad (3),
- die Abzugsvorrichtung (4), z. B. einen Raupenabzug,
- das Extrudat (5).

Figur 1 zeigt eine Anlage, bei der die Zugkraft gemessen wird, die an der ersten Kalibrierkammer angreift. Diese Kalibrierkammer (2a) ist in Richtung der Zugkraft beweglich und reibungsarm gelagert. Sie wird über die Kraftmeßvorrichtung (6) und die Abstützung (7) in ihrer Position gehalten. Die anderen beiden Kalibrierkammern sind mit dem Kalibriertisch fest verbunden, die anderen Apparate mit dem Fundament.

Figur 2 zeigt eine Anlage, bei der die Zugkraft gemessen wird, die an allen drei Kalibrierkammern angreift. Diese drei Kalibrierkammern sind in Richtung der Zugkraft beweglich und reibungsarm gelagert. Sie werden über die Kraftmeßvorrichtung (8) und die Abstützung (9) in ihrer Position gehalten. Alle Apparate mit Ausnahme der drei Kalibrierkammern sind mit dem Fundament fest verbunden.

Figur 3 zeigt eine Anlage, bei der die Zugkraft gemessen wird, die an der Abzugsvorrichtung angreift. Die Abzugsvorrichtung ist in Richtung der Zugkraft beweglich und reibungsarm gelagert. Sie wird über die Kraftmeßvorrichtung (10) und die Abstützung (11) in ihrer Position gehalten. Alle Apparate mit Ausnahme der Abzugsvorrichtung sind mit dem Fundament fest verbunden.

Figur 4 zeigt eine Anlage, bei der die Spaltöffnungs-Druckkraft gemessen wird, die am Deckel der ersten Kalibrierkammer angreift. Der Deckel ist in vertikaler Richtung verschiebbar gelagert und in horizontaler Richtung geführt. Der Deckel wir über die Kraftmeßvorrichtung (12) und die Abstützung (13) in seiner Position gehalten. Alle Apparate sind mit dem Fundament fest verbunden.

Die hier dargestellten Kraftmeßvorrichtungen sind als Druckkraftmesser angeordnet. Es ist ohne weiteres möglich, sie als Zugkraftmesser anzuordnen.

Zum Anfahren dieser Extrusionsanlage wird das Extrudat bei geöffneten Kalibrierkammern von Hand durch die Kalibrierkammern und durch das Kühlbad gezogen und in die Abzugsvorrichtung eingelegt. Sobald die Abzugsvorrichtung das Extrudat kraftschlüssig erfaßt hat, werden die Kalibrierkammern geschlossen und die Abzugsvorrichtung wird von Hand auf den Sollwert der Abzugsgeschwindigkeit eingestellt. Dabei wird jeweils der beweglich gelagerte Teil über die Kraftmeßvorrichtung gegen die Abstützung gedrückt. Die Kraftmeßvorrichtung gibt ein von der Zugkraft abhängiges -im allgemeinen proportionales -Signal ab.

Die Abzugsvorrichtung ist mit einer nicht dargestellten Geschwindigkeitsregelung ausgestattet.

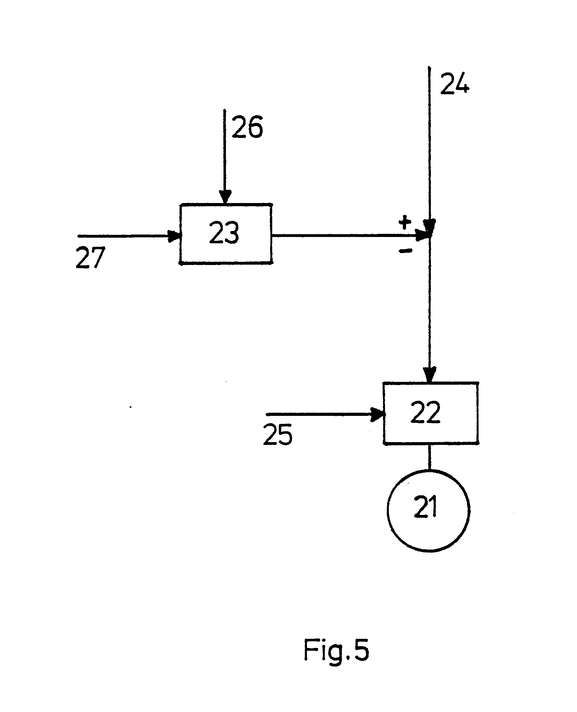

Figur 5 zeigt das Schema für die Führung der Abzugsgeschwindigkeit durch die auf das Extrudat wirkende Zugkraft oder durch die Spaltöffnungs-Druckkraft. Der Antrieb (21) für die Abzugsvorrichtung hat eine Antriebsregelung (22) und einen vorgeschalteten Führungsregler (23) mit Begrenzung seines Stellbereiches.

Die Eingangsgrößen sind folgendermaßen mit der Regelung verknüpft: An der Antriebsregelung wird der Sollwert der Abzugsgeschwindigkeit (24) von Hand eingestellt. Durch Vergleichen mit der auf die Antriebsregelung wirkenden gemessenen Abzugsgeschwindigkeit (25) hält die Antriebsregelung die Abzugsgeschwindigkeit auf dem Sollwert.

Am Führungsregler wird der Sollwert der Kraft als Führungsgröße (26) von Hand eingestellt. Durch Vergleichen mit der auf den Führungsregler wirkenden gemessenen Kraft (27) -Zugkraft im Extrudat oder Spaltöffnungs-Druckkraft -entsteht am Ausgang des Führungsreglers ein Signal, das die von Hand vorgegebene Abzugsgeschwindigkeit in der Umgebung ihres Sollwertes verändert. Damit wird im Endeffekt die gemessene Kraft auf dem Kraft-Sollwert gehalten und die vorgegebene Abzugsgeschwindigkeit schwankt in der Umgebung ihres Sollwertes.

Für die beiden folgenden Beispiele wird eine Extrusionsanlage eingesetzt, die analog zu Figur 2 aufgebaut ist. Der Doppelschnecken-Extruder ist mit einem Profilwerkzeug zur Herstellung einer geschäumten Hart-PVC-Platte mit den Abmessungen 300 mm $^\times$ 16 mm ausgerüstet. Die geschäumte Platte wird durch Aufschäumen nach innen hergestellt (DE-AS 17 29 076). Hierbei erfolgt die Verschäumung zum Extrudatkern hin, was durch einen Dorn im Profilwerkzeug ermöglicht wird. Die gekühlte erste Kalibrierkammer schließt sich unmittelbar an das Profilwerkzeug an; der Abstand zwischen Profilwerkzeug und Vorderkante der Kalibrierkammer beträgt ca. 0,5 mm. Der Sollwert der Abzugsgeschwindigkeit der extrudierten Platte beträgt 0,42 m pro Minute.

Alle drei Kalibrierkammern sind in Richtung der Zugkraft beweglich und reibungsarm gelagert und über eine elektrische Kraftmeßdose (Meßbereich 10 Kilonewton) abgestützt. Der Sollwert der Zugkraft im Profilkörper beträgt 5,2 kN.

Ohne wiederholtes und häufiges Verändern der Abzugsgeschwindigkeit durch die Bedienungsperson schwankt die Zugkraft in der extrudierten Platte um + -1,2 kN; die dabei hergestellte extrudierte Platte zeigt erhebliche Schwankungen in der Maßhaltigkeit. Demzufolge ist die Ausschußquote verhältnismäßig groß.

Beispiel 1: Verändern der Abzugsgeschwindigkeit von Hand (Vergleichsverfahren)

Bei wiederholtem und häufigem Verändern der Abzugsgeschwindigkeit von Hand (Schwankungsbereich etwa +-2 cm pro Minute) gelingt es einer geschickten Bedienungsperson, die Schwankung der Zugkraft in der extrudierten Platte im Bereich von +-300 N um den Sollwert zu halten. Die Anlage wird praktisch ständig durch eine Bedienungsperson beaufsichtigt.

Die Abmessungen der derart hergestellten extrudierten Platte schwanken um -5,3 % der Solldicke und um -0,4 % der Sollbreite. Die extrudierte Platte weist in der Schnittfläche vereinzelt größere Lunker auf. Die einwandfreien Abschnitte der extrudierten Platte sind viele Meter lang.

Beispiel 2: Führen der Abzugsgeschwindigkeit durch die Zugkraft im Extrudat (erfindungsgemäßes Verfahren)

Das Signal der elektrischen Kraftmeßdose wird entsprechend Figur 5 über den Führungsregler auf die Antriebsregelung gelegt. Der Stellbereich des Führungsreglers ist auf +-10 % des Sollwertes der Abzugsgeschwindigkeit begrenzt. Im Dauerbetrieb schwankt die Zugkraft im Profilkörper um +-20 N und die Abzugsgeschwindigkeit um +-0,8 cm pro Minute. Die Anlage läuft stundenlang ohne Beaufsichtigung. Nach 6 Stunden Laufzeit ohne jeden manuellen Eingriff schwanken die Abmessungen der extrudierten Platte über eine Länge von 150 m um - 0,6 % der Solldicke und um -0,08 % der Sollbreite. Die extrudierte Platte weist in der Schnittfläche eine gleichmäßige Schaumstruktur ohne größere Lunker auf. Die extrudierte Platte ist in ihrer gesamten Länge einwandfrei.

**Ansprüche**

1. Verfahren zur Herstellung geschäumter Extrudate mit engen Maßtoleranzen und gleichmäßiger Schaumstruktur aus treibmittelhaltigen Kunststoffen auf Extrusionsanlagen, gekennzeichnet durch
-Messen einer Kraft an der Kalibrierung der Extrusionsanlage oder an der Abzugsvorrichtung und
-Führen des Sollwertes der vorgegebenen Abzugsgeschwindigkeit mittels einer aus der gemessenen Kraft abgeleiteten überlagerten Führungsgröße, wobei der Stellbereich des Führungsreglers auf einen Teil des Sollbereiches der Abzugsgeschwindigkeit begrenzt ist.

2. Verfahren nach Anspruch 1, gekennzeichnet durch
-Messen der Zugkraft in Laufrichtung des Extrudates an der Kalibrierung im Einlaufteil der Kalibrierzone.

3. Verfahren nach Anspruch 1, gekennzeichnet durch
-Messen der Zugkraft in Laufrichtung des Extrudates an der Abzugsvorrichtung.

4. Verfahren nach Anspruch 1, gekennzeichnet durch
-Messen der Spaltöffnungs-Druckkraft an der Kalibrierung im Einlaufteil der Kalibrierzone.

O.Z. 4132

Fig.1

Fig.2

Fig.3

Fig.4

Fig.5